# EUROPEAN PATENT SPECIFICATION

(11) **EP 2 346 328 B1**
(45) Date of publication and mention of the grant of the patent: **07.01.2015**
(21) Application number: 09766168.0
(22) Date of filing: 18.06.2009
(51) Int. Cl.: A01N 37/10, A01N 65/00, A01P 7/02

(54) **USE OF COSTIC ACID OR EXTRACTS OF DITTRICHIA VISCOSA AGAINST VARROA DESTRUCTOR**
VERWENDUNG VON COSTIC SÄURE ODER EXTRAKTEN VON DITTRICHIA VISCOSA GEGEN VARROA DESTRUKTOR
UTILISATION D'ACIDE COSTIQUE OU D'EXTRAITS DE DITTRICHIA VISCOSA CONTRE LE PARASITE VARROA DESTRUCTOR

(30) Priority: 20.06.2008 GR 20080100414
(43) Date of publication of application: 27.07.2011
(73) Proprietor: Katerinopoulos, E. Haralambos, Iraklion, Crete 71003 (GR); University of Crete, Heraklion, 71409 Crete (GR); Isaakidis, Demosthenis, Iraklion, Crete 71003 (GR); Sofou, Kalliopi, Iraklion, Crete 71003 (GR); Spyros, Apostolos, Iraklion, Crete 71003 (GR)
(72) Inventor: KATERINOPOULOS, E. Haralambos, Iraklion Crete 71003 (GR); ISAAKIDIS, Demosthenis, Iraklion Crete 71003 (GR); SOFOU, Kalliopi, Iraklion Crete 71003 (GR); SPYROS, Apostolos, Iraklion Crete 7100 (GR)
(86) International application number: PCT/GR2009/000040
(87) International publication number: WO 2009/153607

(56) References cited:
- WO-A-00/21364
- GARCIA MATIAS ET AL: "Allelochemical effects of eudesmane and eremophilane sesquiterpenes on Tribolium castaneum larvae." JOURNAL OF CHEMICAL ECOLOGY, vol. 29, no. 1, January 2003 (2003-01), pages 175-187, XP002544810 ISSN: 0098-0331
- BLANC MARIE-CECILE ET AL: "Identification and quantitative determination of eudesmane-type acids from the essential oil of Dittrichia viscosa sp viscosa using C-13-NMR spectroscopy" PHYTOCHEMICAL ANALYSIS, vol. 16, no. 3, May 2005 (2005-05), pages 150-154, XP002544811 ISSN: 0958-0344
- MANSOUR F ET AL: "The potential of middle eastern flora as a source of new safe bio-acaricides to control Tetranychus cinnabarinus, the carmine spider mite." PHYTOPARASITICA, vol. 32, no. 1, January 2004 (2004-01), pages 66-72, XP002544812 ISSN: 0334-2123

## Description

### BACKGROUND OF THE INVENTION

Bees are insects that belong to the order of Hymenoptera and are ranking, from the financial point of view, as the most important insect for man.

Bees appeared on Earth at least 15 million years ago and are considered among earth's oldest residents, still surviving today. It belongs to the very few insects that man tried to exploit, an action based on financial criteria.

The honey bee or ***Apis mellifera,*** as it is formally called, is an insect of great financial and ecological importance with an interesting diversity of races. This fact is due to the bee's ability to adapt to different environments through the centuries, as a resident of Europe, Asia, and Africa.

The classification of the bees is based in morphological as well as social criteria, the latter concerning the life style of the bee. The older species live a solitary life, such as those belonging to the genus *Adrena* or *Megachile.* Higher in the phylogenetic evolution ranking belong some semi-social types as those that belong to the genus *Bombus*. The most evolved species belong to the genus *Apis.*

*Apis mellifera* is considered a relatively new species and its many subspecies were developed during the Pleistocene period. Its name "mellifera" is indicative of its practice to collect nectar and to produce large quantities of honey. According to recent data,¹ the *Apis* genus includes nine (9) species: *Apis dorsata, Apis laboriosa*, *Apis binghami, Apis breviligula*, *Apis mellifera, Apis cerana, Apis koschevnikovi, Apis florea, Apis adreniformis.* Lately, a new species, namely *Apis nuluensis* has been detected.²

The species *A. Mellifera* is divided in 27 subspecies based on morphometric, biogeographical and behavioral criteria. ^{3,4,5,6} Most of these characteristics are genetically based and therefore, it might be concluded that the genetic diversity of the tribes is large. It is possible that the large number of races is due to the fact that each bee subspecies lived in different environment out of contact with the rest of the honey bee colonies.

Bees have been classified, through morphometric studies, in three evolutionary clades including different groups of races. Clade A, that includes the subspecies from South and Central Africa, Clade M including subspecies from Northern Europe, Spain, Portugal and North Africa, and Clade C, including the subspecies from Eastern Europe, North Mediterranean and Middle East. The known subspecies in Greece are *A.m.adami* (Crete, North Aegean), *A.m.carnica* (Ionian Islands), *A.m.macedonica* (Macedonia-Thrace), *A.m.cecropia* (Central and South Greece) and in Cyprus the subspecies *A.m.cypria,* according to morphometric studies of Ruttner.³

One of the major diseases of the pupae and the adult bees is the so-called ***Varroosis*** or ***Varroasis*** or ***Varroa Acariasis*** that is due to the bee parasite called ***Varroa destructor.***

The *Varroa* mite, (or *Varroa destructor* Anderson & Trueman), an ectoparasite of honey bees, was first described in 1904 by Oudemans,⁷ as *Varroa jacobsoni* from Java infesting *Apis cerana.* Little attention was paid on this description of parasite since it did not affect its host. When and how, *varroa* moved on *to A. **mellifera,*** .is not clear. The fact is that in less than forty years the parasite spread worldwide except in Australia.

The spread of the parasite is mainly due to anthropogenic factors. During the period that the disease was not known, the international bee market transferred the acari almost everywhere in the world.

In 2000 Anderson and Trueman, after studying mtDNA Co-1 gene sequences and morphological characteristics of many populations of *V. jacobsoni* from around the world, split it into two species. *Varroa jacobsoni* s.s. infests *Apis cerana* F. in the Malaysia-Indonesia region whereas *Varroa destructor* Anderson & Trueman, infests its natural host *A. cerana* on mainland Asia and also *A. mellifera* L. worldwide, except in Australia.⁸

The life cycle of *Varroa destructor,* Anderson & Trueman, starts in the sealed pupae where *varroa* finds a safe refuge to lay its eggs and there is enough food for developing during the first, sensitive stages of its life.

As the pupae develop efficiently, they leave their cells freeing the young parasites that in that stage, are reaching maturity. Soon they leave their young host to transfer to mature ones, preferably nurse bees, drones, and a small fraction, smaller than 1%, parasites on the workers.

In each infected area, the source of infection is the already infected bee population. The acari spread among beehives by moving worker bees, drones, and by beekeeper activities. In infected areas, bee wandering in conjunction with the density of bee population plays a vital role in bee infection or re-infection of bees that have been treated against *varroa.*

Bees attacked by *varroa* are hurt in two different ways: a) by loss of hemolymph which is a crucial factor,⁹ and b) through the opening caused by the parasite in their bodies which allows infection and disease development. During the first period of a honey bee colony infection, symptoms are not detectable since *varroa* population increases slowly. The infection should reach the 15-20% of the bee population for the symptoms to be visible, and as it reaches levels of 30-40%, symptoms become more obvious. The symptoms vary from loss of bee weight to deformations of the host such as defections of the wings and legs. ^{10,11,12}.

*Dittrichia viscosa* (L.) W. Greuter (syn. *Inula viscosa* (L.) Aiton), is an invading ruderal species of the Asteraceae family.¹³ It is mentioned in Greek with the common names :aconizia", "aconiza", "neroconyzos", "conyzos", "nerocollysia", "collitsaria", "psilithron" and "scotzari". It is likely that the names *"κονυζα η αρρην*" *(male coniza)* by Theophrastus or "*κονυζα η µεγαλη"* (coniza the great) by Dioscurides, is *D. viscosa.* It is an herbaceous long-living perennial plant viscous and sticky in touch, fragrant, multi-leave with vertical shoots, and lignified in its base. Its leaves are lanceolate or dentate acute.

It is abundant in uncultivated, rocky places in Greece as well as in the entire Mediterranean area.¹⁴ It is an invading ruderal shrub growing in deserted, due to anthropogenic factors, areas and as a result its spreading grows fast given that deserted land is also spreading fast. It blossoms in the fall and its flowers are of intense yellow color. It is an exceptionally pollinating plant. Due to the fact that it blossoms in the fall, it is very useful in the bee-keeping business given that in the fall pollen is scarce and is necessary for the growth of the pupae and the renewal of the bee population.¹⁵.

The surface of the stems and the leaves of the plant are sticky and viscous since it secretes a multicomponent mixture of compounds, mainly terpenoids,,¹⁶ flavonoid aglycons and simple phenolics.¹⁷ The leaves and young stems of the plant carry sessile and petiolate grandular hairs that are functional throughout its life, from the first stages of development till it reaches maturity. It is not known that these two types of hair secrete the same mixture of compounds or, in the latter case, if the compounds have similar function.¹⁸

Both types of hair include a glandular head that consist of three cell types: the cell couple on the top, a cell couple underneath it and three couples of photosynthetic cells. The head cells secrete lipids polysaccharides and proteins. Regarding the secretory cells the lipids are secreted through pores in the cuticle whereas the polysaccharides accumulate under the cuticle that later brake freeing the compounds. The material, therefore, that is produced afterwards from the secretory cells is delivered in the plant's environment.¹⁹

In subcellular level, it appears that contributing in the secreting function are the smooth and the rough endoplasmic reticulum, the plastids and the mitochondria as well as the Golgi apparatus. The secretion is known as the epicuticle component mixture since it is embodied to a greater or lesser degree in the waxy epicuticle. This secretion is approximately 70% water soluble. This material reduces the water loss from the plant from the cuticle and is strongly allelopathetic.²⁰

Due to the pharmaceutical properties of the components of the secretion, a number of efforts have been made to isolate and identify these components. Besides the flavonoids,¹⁶ scientists identified terpenes, mainly sesquiterpenic lactones and sesquiterpenic acids,^{21,22,23} such as 3β-hydroxyilicic acid, 3-(R)-hydroxy-*epi*-ilicic acid, 2α-hydroxyilicic acid and 9β-hydroxy-2-oxoisocostic acid.²⁴

In 1992, ten triterpenes were isolated as free alcohols or the respective acetates or lipid esters such as dammaradienyl acetate, taraxasteryl acetate, pseudotaraxasteryl acetate, friedelin, 3-epifriedelinol , a mixture of lipids of faradiol, pseudotaraxasterol, taraxasterol, 20(29)-lupene-3β,16β-diol, its 3-beta monoacetate and lipids of 2-(4'-hydroxyphenyl)- ethanol.²⁵

Fourteen additional components of the secretion include:3,3'-di-*O-*methylquercetin, ^{26,27} 3-*O*-acetylpadmatin,²⁷ 3-methylquercetin,²⁷ hispidulin,²⁷ nepetin,²⁸ 2-desacetoxyxanthinin,²⁹ inuviscolide, ^{29,30} 2-oxoisocostic acid, ³¹ ilicic acid, ^{32,33,34,35} viscic acid,^{32,33} β-sitosterol,³⁶ β-sitosteryl glucoside, 3,7,4'-trimethoxy-5,3'-dihydroxyflavone³⁷ and 1 1α,13-dihydroinuviscolide.³⁸

Related studies indicate that the aqueous extracts of the leaves of the plant exhibit strong allelopathetic activity against phytopathogenic fungi, acari, and some plants. It was also found that the water extracts of the secretion increase the mortality in the early stages of life of the acari *Tetranychus urticae* Koch, while they do not affect the mortality of the mature species or the hatching of the eggs.

### DETAILED DESCRIPTION OF THE INVENTION

**Plant Material and Extracts.** The leaves of *D. viscosa*, collected from five different areas of Crete were dried in a shaded and dry place for twenty days. A sample (10.3 g) was then pulverized and subsequently extracted with 1 liter ethanol in a 2 liter Soxhlet apparatus for 4.0 hours, using a thimble 12cm x 3,5cm. The yield of the crude extract (2.70 g) was 26% based on the dry-leaves weight.

### Isolation of Component Fractions from the Extract.

The extract components were partially separated by gradient flash chromatography using Silica Gel 60 (0.040-0.063mm) as absorbent and subsequently 5%, 10%, 15%, 20%, 25%, 30%, 35%, 40%, 45%, 50%, 55%, 60%, 65%, 70%, 80%, 90% of acetone in petroleum ether as eluent, followed by a washing of the column with methanol to remove the polar components. For a 0.64 g sample, efficient separation required the use of a silica column of 3 cm in diameter and 13 cm height. A total of 131 fractions of 13 mL each, containing most of the components were collected from the column and during the methanol washout, four 50 mL samples were collected

TLC samples were taken from every second test tube and were developed on TLC silica gel 60, F254S plates using acetone/toluene 30% as eluent. The components were detected through use of phosphomolybdic acid solution (3%) in ethanol and subsequent heating of the plates. According to this procedure the fractions were separated in three groups with the following respective R_{f}: Group A' R_{f}: 0.90-0.80, group B' R_{f}: 0.80-0.60, group C' 0.10-0.01.

***In vivo* Experiments with *V. destructor.*** The mites ***(V.** destructor)* were collected from colonies of *A. mellifera.* For mite collection two different methods were used: The first method involved removal of the mites from infected adult bees using a soft brush with the help of a stereoscope. In method b) infected adult honeybees were transferred directly from bee frames into a wire-screen cylinder. Then the cylinder was placed inside a second Plexiglas cylinder and CO₂ was released for 5 min with a flow rate of 5 l/min causing anaesthesia to the mites (as well as to the bees). The whole apparatus was then shaken several times to separate the mites from the bees. In a few minutes they had recovered from the effect of the anaesthesia.³⁹

Using a stereoscope binocular set *varroa* was placed in 20 mL glass vials. Stock solutions of the extraction materials were prepared in acetone in 10 mg/mL concentrations. In each experiment 20, 60, or 100 microliter aliquots of the stock solution were placed on filter paper adjusted to the cups of 20 ml vials, each containing five living mites. Acetone was used in the control experiments which were performed in five replicates. In both cases the solvent was allowed to evaporate before covering the vials. The vials were kept in an incubator at 37 C. Mortality of mites was recorded under a stereoscope binocular set after 5, 8, 12, and 19 hours.

In the first series of *in vivo* experiments, the acaricidal activity was detected in Group B', the group of compounds with a range of R_{f} 0.80-0.60. It must be mentioned here that the same group of compounds exhibited insect-attracting activity. Given the activity of Group B', this mixture was analyzed with GC/MS (gas chromatography coupled with mass spectrometry) with the purpose of identifying its components.

**Isolation of costic acid.** Repeated flash chromatography of biologically active Group B' (R_{f} 0.80-0.60), performed according to the above-mentioned conditions, yielded a major component that was identified as costic acid (R_{f} 0.70). The yield of the compound was 4.5% w/w of the initial extract. Two more components isolated via flash chromatography of Group B; were identified from their mass spectra as 7-O-methyl-Aromadendrin and 7-O-methyl-Aromadendrin-3-acetate, respectively.

A new series of *in vivo* experiments followed, using solutions of the above-mentioned three components. The results indicated that the acaricidal activity rested in costic acid. The optimal concentration of the stock solution of costic acid was 60 microliter per vial since the use of higher concentrations did not result in enhanced activity.

### EXAMPLES

**Example 1.** A composition for acaricidal use against *Varroa destructor,* the composition comprising 0,1 g of costic acid dissolved in 10 mL of ethanol and further diluted with water to a final volume of 1L. This composition was successfully used in field tests against *V. destructor* in various locations of the island of Crete.

**Example 2.** A composition for acaricidal use against *Varroa destructor,* the composition comprising 1,0 g of the Group B' extract, as defined above, dissolved in 10 mL of ethanol and further diluted with water to a final volume of 1 L. This composition was successfully used in field tests against *V. destructor* in various locations of the island of Crete.

**Example 3.** A composition for acaricidal use against *Varroa destructor,* the composition comprising 1,0 g of the total extract, as defined above, dissolved in 10 mL of ethanol and further diluted with water to a final volume of of 1 L. This preparation was successfully used in field tests against *V. destructor* in various locations of the island of Crete.

**Example 4**.**Cytotoxicity assays in human cells.** Cytotoxicity of costic acid was measured in human umbilical vein endothelial cells (HUVEC), using the Cell Proliferation Reagent WST-1 (Cat. No. 13396300, Roche). The assay was performed according to the instructions protocol. Cells (7500 per well) were exposed to different concentrations of costic acid for 24 h before adding the WST-1 reagent. After 4h and again after 24h the absorbance was measured using an Optimax UV/VIS spectrometer (wavelengths: 440nm and 650nm). Costic acid was not cytotoxic at concentrations up to 230 micromolar.

**Example 5. Field Tests on bee populations.** Field test were conducted using 40 bees on each trial at various locations on the island of Crete such as the Lassithi Plateau and the Messara Plains. In the field tests, Group B' extract was used in a solution of 1 g of this extract in 1 ml ethanol that was further diluted with water to a total volume of 1 L. A second solution was prepared as described above, using 2 g of Group B' mixture. For comparison purposes, each bee population was divided in four groups. Two of these groups were treated with commercial acaricides A fifth, control group, was sprayed with deionized water. As known acaricide preparations were used a) BAYVAROL (active ingredient: Flumethrine) and b) a 4% solution of oxalic acid in 50% sugar solution. The total volume of solutions that were sprayed directly on the bees was 100 mL per group. In the case of the oxalic acid solution, the volume was 70 mL. Dead varroa was collected on a sheet of paper covered with Vaseline and sunflower oil. After ten days, the number of dead varroa was counted. Considering the number of dead varroa in the oxalic acid experiment as 100%, the respective numbers were 60% for either extract preparation, 55% for BAYVAROL and 8% for the control. None of the above mentioned trials resulted in any death of treated bees.

**Example 5. Spectroscopic Identification of the Active Component in** *D **viscosa.***

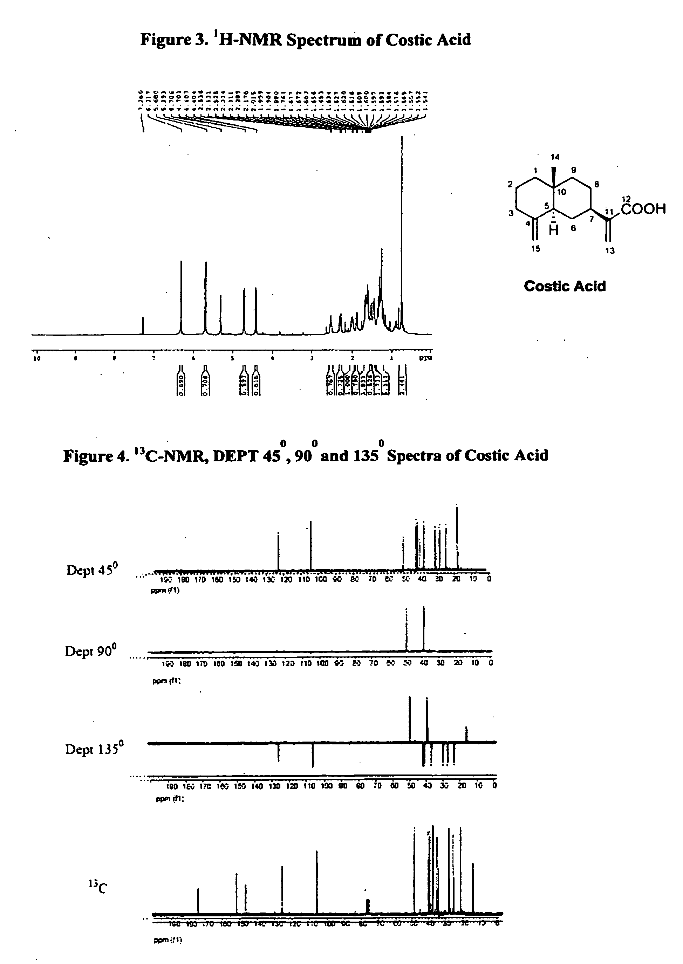

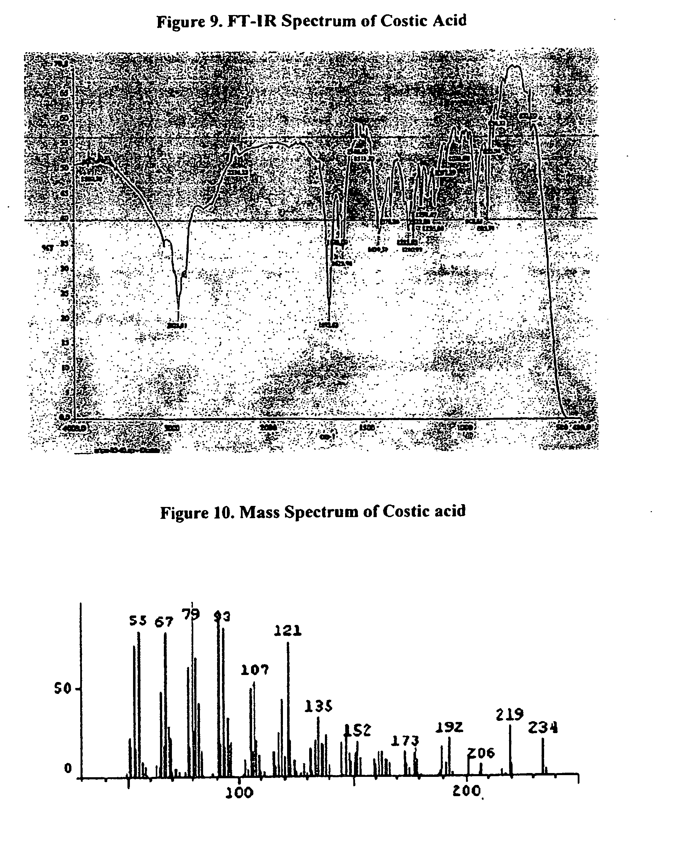

Initial studies of the active component of *D. viscosa* indicated that it was a known compound, with the common name of costic acid. Literature search indicated that there were discrepancies in the reported ¹³C NMR spectra of costic acid^{40,41,42} and given the importance of the compound in our biological studies, we decided to perform a full spectroscopic identification of the compound which is briefly described as follows:
IR spectroscopy clearly indicated the presence of a carboxyl moiety (2928cm⁻¹ **Figure 9****).** ¹H-NMR experiments **(****Figure 3****)** indicated the presence of a methyl group at 0,75 ppm (3 H, H-14) and four olefinic protons at 6,31 ppm (H-13_{α}) and at 5,68 ppm (H-13_{β}),as singlets, as well as at 4,71 ppm (H-15_{β}) and at 4,41 ppm (H-15_{α}) exhibiting a small splitting value, thus indicating the presence of two double bonds in the carbon framework. The total number of integrated protons was 21 plus a carboxylic acid proton, whereas carbon NMR experiments indicated the presence of 15 carbons **(****Figure 4****).**

Comparison of the DEPT experiments data with those of the initial carbon NMR spectrum reveals the identity of each carbon atom in the molecule. Thus, the presence of a methyl group was indicated, together with six secondary aliphatic, two tertiary aliphatic, one quaternary aliphatic, one carbonyl, two quaternary olefinic and two secondary olefinic **(****Figure 4****).** ¹³C-NMR experiments showed the presence of four quaternary carbons at 36,04 (C-10), 145,44 (C-11), 150,73 (C-4), and 172,83 (C-12) ppm that are not present in the DEPT experiments. From the chemical shifts is apparent that the latter one belongs to a carbonyl group two more belong to olefinic systems whereas the one at 172.83 ppm is primary. The tertiary carbons appear at 50,00 (C-5) and 39,48 (C-7) ppm as shown by a DEPT 135° experiment, and the eight secondary appear at 23,58 (C-2), 27,44 (C-8), 30,12 ppm (C-6), 36,96 (C-1), 41,19 ppm (C-9), 41,97 ppm (C-3), 105,63 (C-15) and at 124,94 (C-13) ppm. The fact that the last two secondary carbons belong to olefinic systems, implied the presence of two exocyclic double bonds. Finally, the methyl group carbon appears at 16,51 ppm (C-14). In the DEPT 90 that indicates the presence of CH carbons, intense peaks appear at (C-5) 50,00 ppm and (C-7) at 39,48 ppm.

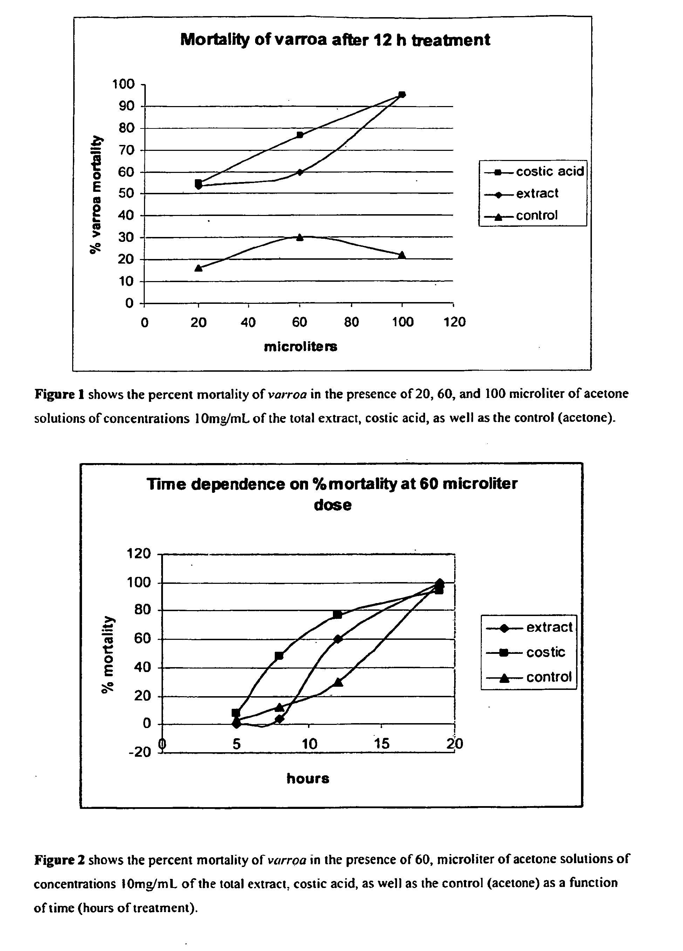

The mass spectrum gave a parent peak at m/z: 234 corresponding to a possible molecular formula of C₁₅H₂₂O₂. With an unsaturation degree of five, one carbonyl and two olefinic double bonds present, we proposed as possible structure the bicyclic system of costic acid shown in Figure 1.

Costic acid is a component of other species besides *D. Viscosa* such as *D. Graveolens⁴³* and therefore these species are materials useful for the control of *V. Destructor.* The fact that no honey sample analysis mentions the presence of costic acid in conjunction with the fact that bees visit the plant during the September-October period is a very strong indication that costic acid is not present in honey produced by bees treated with the above mentioned preparations. Analyses performed by our group along these lines support this statement.Regarding the absolute configuration of costic acid, we propose that is the same with that reported by Bawdekar *et al,*⁴⁴ given that the experimental value of [α]_{D} = + 24.03° (*c*, 1.3 MeOH), is comparable to the literature value [α]_{D} = + 23.42° (c, 1.3, MeOH).

### BRIEF DESCRIPTION OF THE DRAWINGS

In **Fig. 1** the percent mortality of *varroa* in the presence of 20 or 60 or 100 microliters of acetone solutions, containing concentrations of 10mg/mL of a) total extract, b) costic acid as well as a control containing only the solvent. It is clear that the mortality of *varroa* increases drastically in the presence of costic acid whereas the activity of the total extract reaches similar levels only in the highest dose. The percent mortality of the mites in the control experiment is generally the same.

In **Fig. 2** the activity of the samples is presented as a function of time of application. The largest activity difference between costic acid and total extract appears after 8 hours after application and this difference is reduced afterwards. Attention should be paid in the mortality increase in the case of the control experiment. It is known from previous experiments that most of the population of the parasite dies after separating from its host. It is therefore expected that mortality levels would reach levels of 100% after 19 hours. IT is also possible that this is a decisive factor for the decrease of the difference in activity of the costic acid vs. that of the total extract in the 12 h experiment. The real activity difference is therefore more accurately presented after 8 h, when mortality of *varroa* due to the separation from its host, is minimal.

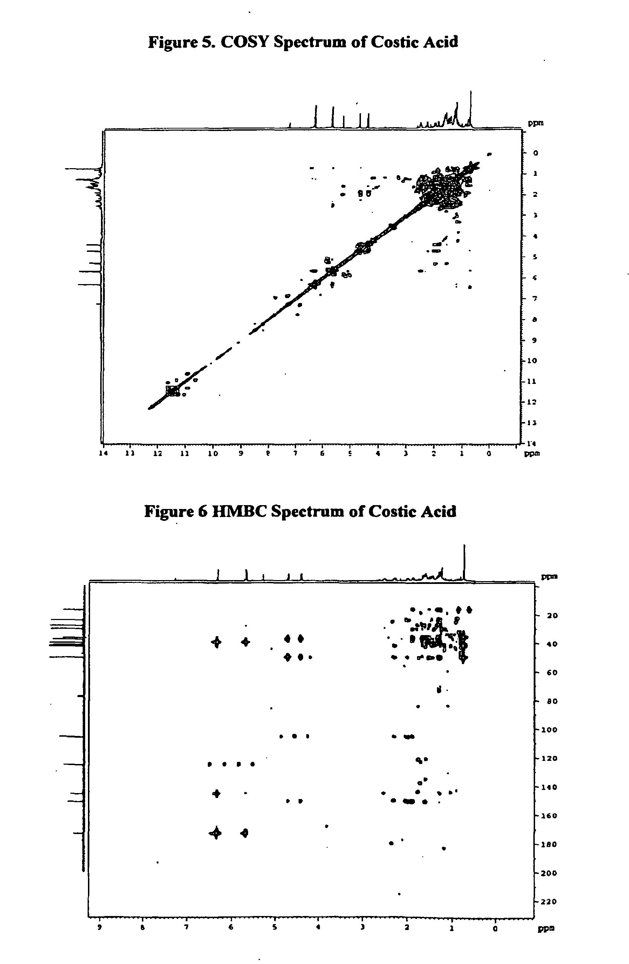

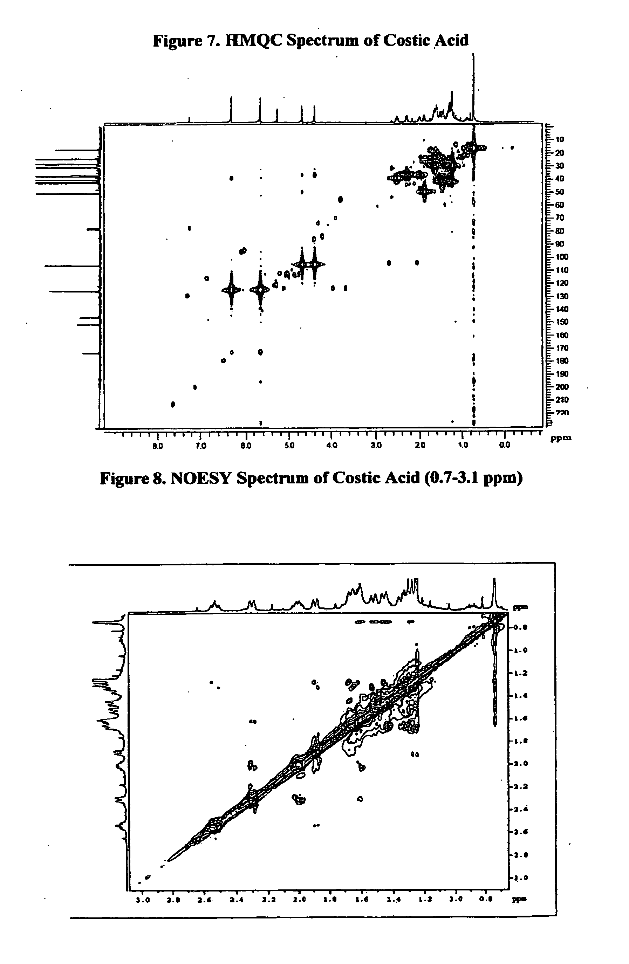

Detailed analysis of one and two-dimentional NMR spectra **(****Figures 3-8****)** is depicted on the following Table.

| Position | Proton | δ¹H | COSY | NOESY | δ¹³C | HMBC |
|---|---|---|---|---|---|---|
| 1 | H-1 | 1.44 (m) | H-1' | - | 41.97 | H-3, H-14, H-2 |
| | H-1' | 1.26 (m) | H-1, H-2' | H-9', H-7', H-5', H-3', H-2 | | |
| 2 | H-2 | 1.58 (m) | H-3 | H-3' | 23.58 | H-1, H-1', H-3, H-3' |
| | H-2' | 1.61 (m) | H-3', H-1' | H-14, H-3 | | |
| 3 | H-3 | 2.31 (dtd) | H-3', H-2, H-15_{α} | H-15_{β}, H-2' | 36.96 | H-2, H-15_{αβ} |
| | H-3' | 2.00 (br dd) | H-3, H-2', H-15_{αβ} | H-5', H-1', H-2 | | |
| 4 | - | - | - | - | 150.73 | H-3, H-3', H-5', H-2, H-6' |
| 5 | H-5' | 1.89 (br d) | H-6', H-15_{αβ} | H-7', H-3', H-9', H-1, H-6 | 50.00 | H-3, H-3', H-6, H-6', H-1, H-9, H-14, H-15_{α,β} |
| 6 | H-6 | 1.68 (m) | H-6' | H-7', H-5',H-15_{α}, H-13_{β} | 30.12 | H-5' |
| | H-6' | 1.29 (q) | H-6, H-7', H-5' | H-8', H-14, H-15_{α}, H-13_{β} | | |
| 7 | H-7' | 2.53 (dtt) | H-6' H-8', H-8 | H-1 , H-5' , H-9' H-8, H-6 | 39.48 | H-6, H-6', H-9, H-13_{αβ} |
| 8 | H-8 | 1.64 (m) | H-8', H-7' | | 27.44 | H-9, H-9', H-6, H-6' |
| | H-8' | 1.47 (m) | H-8 , H-9', H-7' | H-6', H-14, H-13_{β} | | |
| 9 | H-9 H-9' | 1.53 (m) 1.37 (br d) | H-9' H-8', H-9 | H-14 H-1', H-5', H-7' | 41.19 | H-8' |
| 10 | - | - | - | - | 36.04 | H-5', H-2, H-6, H-8, H-1', H-9, H-9', H-14 |
| 11 | - | - | - | - | 145.44 | H-7', H-6, H-6', H-8', H-13_{αβ} |
| 12 | - | - | - | - | 172.83 | H-7', H-13_{αβ} |
| 13 | H-13_{α} | 6.31 (s) | H-13_{β} | - | 124.94 | H-7' |
| | H-13_{β} | 5.68 (s) | H-7', H-13_{α} | H-6, H-6', H-8', H-7' | | |
| 14 | H-14 | 0.75 (s) | | H-2',H-8',H-6', H-9 | 16.51 | H-5', H-9', H-1' |
| 15 | H-15_{α} | 4.39 (d) | H-3', H-5', H-3 | H-6',H-6' | 105.63 | H-5', H-3', H-3 |
| | H-15_{β} | 4.71 (d) | H-3', H-5' | H-3 | | |

| | | | | | | |
|---|---|---|---|---|---|---|
| ¹ Otis, G. W. A Review of the Diversity of Species Within Apis. In: Diversity in the Genus Apis by D. R 1991**.** ² Tingek, S.; Koeniger, N.; Koeniger, G. Senckenbergiana Bio 1996, 76, 115-119. ³ Ruttner, F. Biogeography and Taxonomy of Honeybe. Springer - Verlag, Berlin 1988**.** ⁴ Ruttner, F. Naturgeschichte der Honigbienen Ehrenwirth Verlag, Münich, 1992**.** ⁵ Sheppard,W. S.; Arias, M. C.; Greech, A. Meixner, M. D. Apidologie 1997, 28, 287-293. ⁶ Sheppard, W. S.; Meixner, M. D. Apidologie 2003, 34, 367-375. ⁷ Oudemans, A. C. Leyden Museum 1904, 24, 216-222. ⁸ Anderson, D. L.; Trueman, J. W. H. Expl. Appl. Acarol. 2000, 24, 165-189. ⁹ Chandler, D.; Sunderland, K. D.; Ball, B. V.; Davidson, G. Biocontrol Science and Technology 2001, 11 ,429-448. ¹⁰ Ball, B. V. International Bee Research Association. Cardiv, UK 1993, 9-16. " Ball, B. V. Pests & Diseases 1994, 569-576. ¹² Ball, B. V. International Bee Research Association, Cardiv, UK, 1994, 5-11. ¹³ Stavrianakou, S.; Liakopoulos, G.; Karaboumiotis, G. Environmental and Experimental Botany 2006, 56, 293-300. ¹⁴ Kavvadas D. S. Illustrated Botanical-Plant Dictionary, Volume 4, G. P. Xenou Editions, Athens, 1956**.** ¹⁵ Hatjina, F.; Gounari, S.; Thrasivoulou, A.; Kaplanida, M.; Tselios, D.; The Mellifera Insects of the Pine Tree. Abstracts of the First Scientific Meeting of Apidology - Sericulture, Agricultural University of Athens 11/29-12/1 2002 ¹⁶ Ceccherelli, P.; Curini, M.; Marcotullio, M. C.; Menghini, A. Phytochemistry 1985, 24, 2987-2989. ¹⁷ Wollenweber, E.; Mayer, K.; Roitman, J. N. Photochemistry 1991, 30, 2445-2446. ¹⁸ Werker, E.; Hallahan D. L.; Gray J. C. Advances in Botanical Research 2000, 31, 1-36. ¹⁹ Werker E.; Fahn A. Botanical Gazette 1981, 142, 461-476*.* ²⁰ Stephanou, M.; Manetas, Y. Australian Journal of Plant Physiology 1995, 22, 755-759. ²¹ Ulubelen, A.; Öksüz, S.; Gören, N. Phytochemistry 1987, 26, 1223-1224. ²² Ceccherelli, P.; Curini, M.; Marcotullio, M. C. Journal of Natural Products 1988, 51, 1006-1009. ²³ Sanz, J. F.; Ferrando, C.; Marco, J. A. Phytochemistry 1991, 33, 3653-3655. ²⁴ Abu Zarga, M. H.; Hamed, E. M.; Sabri, S. S.; Voelter, W.; Zeller, K-P. Journal of Natural Products 1998, 61, 798-800. ²⁵ Grande, M.; Torres, P.; Piera, F.; Bellido, S. I. Photochemistry 1992, 31, 1826-1828. ²⁶ Chiappini. I.; Fardella, G.; Menghini, A.; Rossi, C. Planta Medica 1982, 44, 159-161. ²⁷ Grande, M.; Piera, F.; Guenca, A.; Torres, P.; Bellido, I. S. Planta Medica 1985, 51, 414- 419. ²⁸ Wollenweber, E.; Mayer, K.; Roitman, J. N. Phytochemistry 1991, 30, 2445-2446. ²⁹ Bohlmann, F.; Czerson, H.; Schöneweiâ, S. Chemische Berichte 1977, 110, 1330-1334. ³⁰ Sanz, J. F.; Ferrando, C.; Marco, J. A. Phytochemistry 1991, 30, 3653-3655. ³¹ Rustaiyan, A.; Jakupovic, J.; Chau-Thi, T. V.; Bohlmann, F.; Sadjadi, A. Phytochemistry 1987, 26, 2603-2606. ³² Ulubelen, A.; Öksüz, S.; Gören, N. Phytochemistry 1987, 26, 1223-1224. ³³ Ceccherelli, P.; Curini, M.; Marcotullio, M. C.; Menghini, A. Phytochemistry 1985, 24, 2987-2989. ³⁴ Öksüz, S.; Topcu, G. Phytochemistry 1992, 31, 195-197. ³⁵ Fardella, G. Fitoterapia 1979, 50, 3-4. ³⁶ Al-Khalil, S.; Al-Eisawi, D.; Fisher, N. A. Journal of Pharmaceutical Sciences 1992, 6, 307-309. ³⁷ Kumari, G. N.; Rao, L. J .M.; Rao, N. S. P. Proceedings of Indian Academy of Sciences 1986, 97, 171. ³⁸ Jakupovic, J.; Schuster, A.; Bohlmann, F.; King, R. M.; Lander, N. S. Phytochemistry 1988, 27, 3181-3185. ³⁹Ardeshir, A.; Rahim, E.; Gholamhosein, T. Experimental and Applied Acarology 2002, 27, 319-327. ⁴⁰ Blanc, M. C.; Bradesi, P.; Casanova, J. Phytochem. Analysis 2005, 16, 150-154. ⁴¹ Watanabe, Y. Mihara, R.; Mitsunaga, T.; Yoshimura, T. J. Wood Sci. 2005, 51, 514-519. ⁴²Zheng, Q.; Xu, Z.; Sun, X.; Yao, W.; Sun, H.; Cheng, C.; Zhao, Y. Phytochemistry 2003, 63, 835-839. ⁴³ Blanc, M. -C. Muselli, A., Bradesi, P., Casanova, J. Flav. Fragr. J. 2004 19, 314-319. ⁴⁴ Bawdekar, A. S.; Kelkar, G. R. Tetrahedron 1965, 21, 1521-1528. | | | | | | |

## Claims

1. Costic acid as a substance for acaricidal use against *Varroa destructor* as parasite of the honey bee.

2. Composition comprising aqueous solutions containing 0.1-1.0
% (wt/vol) of the total ethanol extract from the plant *Dittrichia viscosa (Greek: aconiza)* containing costic acid of Claim 1, costic acid being a part of the said extract in its natural abundance, as a product for acaricidal use against *Varroa destructor* as parasite of the honey bee.

3. Compositions comprising aqueous solutions containing 0.1-1.0
% (wt/vol) of the fractions of polar components of the total ethanol extract from the plant *Dittrichia viscosa (Greek: aconiza)* of Claim 2, containing costic acid of Claim 1, costic acid being a part of the said fractions in its natural abundance, as products for acaricidal use against *Varroa destructor* as parasite of the honey bee.

4. Composition comprising the total ethanol extract from the plant *Dittrichia viscosa (Greek: aconiza)* of Claim 2, containing costic acid of Claim 1, costic acid being a part of the said extract in its natural abundance, and oxalic acid, as a product for acaricidal use against *Varroa destructor* as parasite of the honey bee.

5. Composition comprising costic acid of Claim 1, and oxalic acid, as a product for acaricidal use against *Varroa destructor* as parasite of the honey bee.

6. Compositions comprising fractions of polar components of the total ethanol extract from the plant *Dittrichia viscosa (Greek: aconiza)* of Claim 2, containing costic acid of Claim 1, costic acid being a part of the said fractions in its natural abundance, and oxalic acid, as a product for acaricidal use against *Varroa destructor* as parasite of the honey bee.

## Patentansprüche

1. Costic Säure als Stoff für akariziden Einsatz gegen Varroa Destruktor als Parasit der Honigbiene.

2. Zusammensetzung umfassend wässrige Lösungen, die 0,1 bis 1,0 % (wt /vol ) der gesamten Ethanol-Extrakt aus der Pflanze Dittrichia viscosa (griechisch: aconiza ) enthalten, Costic Säure der Anspruch 1, wobei Costic Säure ein Teil der genannten Extrakt in seine natürliche Fülle ist, als Produkt für akariziden Einsatz gegen Varroa Destruktor als Parasit der Honigbiene.

3. Zusammensetzungen umfassend wässrigen Lösungen, die 0,1-1,0 % (wt / vol) der Fraktionen der polaren Komponenten der Gesamten Ethanolextrakt aus der Pflanze Dittrichia viscosa (griechisch aconiza) nach Anspruch 2 enthalten, enthaltend Costic Säure nach Anspruch 1, wobei Costic Säure ein Teil der genannten Fraktionen in ihrer natürlichen Hülle ist, als Produkt für akariziden Einsatz gegen Varroa Destruktor als Parasit der Honigbiene.

4. Zusammensetzung, umfassend das gesamte Ethanolextrakt aus der Pflanze Dittrichia viscosa (griechisch: aconiza ) nach Anspruch 2 , enthaltend Costic Säure nach Anspruch 1, wobei Costic Säure ein Teil der genannten Fraktionen in ihrer natürlichen Hülle ist, und Oxalsäure , als Produkt für akariziden Einsatz gegen Varroa Destruktor als Parasit der Honigbiene.

5. Zusammensetzung umfassend Costic Säure nach Anspruch 1, und Oxalsäure als Produkt für akariziden Einsatz gegen Varroa Destruktor als Parasit der Honigbiene.

6. Zusammensetzungen umfassend Fraktionen von polaren Komponenten der gesamten Ethanolextrakt aus der Pflanze Dittrichia viscosa (griechisch: aconiza) nach Anspruch 2, enthaltend Costic Säure nach Anspruch 1, wobei Costic Säure ein Teil der genannten Fraktionen in ihrer natürlichen Hülle ist und Oxalsäure, als Produkt für akariziden Einsatz gegen Varroa Destruktor als Parasit der Honigbiene.

## Revendications

1. Acide Costique comme une substance pour un usage acaricide contre *Varroa destructor* comme parasite de l'abeille.

2. Composition comprenant des solutions aqueuses contenant 0,1 à 1,0 % (wt/vol) de l'extrait de la plante *Dittrichia viscosa* (en grec: aconiza) en éthanol contenant de l'acide Costique selon la revendication 1, l'acide Costique étant une partie dudit extrait dans son abondance naturelle, comme un produit pour un usage acaricide contre *Varroa destructor* comme parasite de l'abeille.

3. Des compositions comprenant des solutions aqueuses contenant 0,1 à 1,0 % (wt/vol) des fractions de composants polaires de l'extrait de la plante *Dittrichia viscosa* (en grec: aconiza) en éthanol selon la revendication 2 , contenant de l'acide Costique selon la revendication 1, l'acide Costique faisant partie de ces fractions dans son abondance naturelle, comme les produits à usage acaricide contre *Varroa destructor* comme parasite de l'abeille.

4. Composition comprenant l'extrait en éthanol de la plante *Dittrichia viscosa* (en grec: aconiza) selon la revendication 2 , contenant de l'acide Costique selon la revendication 1, l'acide Costique étant une partie dudit extrait dans son abondance naturelle, et l'acide oxalique , comme un produit pour acaricide utiliser contre *Varroa destructor* comme parasite de l'abeille.

5. Composition comprenant de l'acide Costique selon la revendication 1, et de l'acide oxalique, comme un produit pour un usage acaricide contre *Varroa destructor* comme parasite de l'abeille.

6. Des compositions comprenant des fractions de composants polaires de l'extrait de la plante Dittrichia viscosa (en grec: aconiza) en éthanol selon la revendication 2 , contenant de l'acide Costique selon la revendication 1, l'acide Costique étant une partie desdites fractions de son abondance naturelle, et l'acide oxalique, comme les produits à usage acaricide contre *Varroa destructor* comme parasite de l'abeille.
